# FASCICULE DE BREVET EUROPEEN

(11) **EP 1 036 420 B1**
(45) Date de publication et mention de la délivrance du brevet: **13.03.2002**
(21) Numéro de dépôt: 98958289.5
(22) Date de dépôt: 01.12.1998
(51) Int. Cl.: H01M 4/58

(54) **ELECTRODE EN FIBRES DE CARBONE POUR BATTERIE SECONDAIRE**
ELEKTRODE AUS KOHLENSTOFFASERN FÜR SEKUNDÄRBATTERIE
CARBON FIBRE ELECTRODES FOR SECONDARY BATTERY

(30) Priorité: 02.12.1997 FR 9715142
(43) Date de publication de la demande: 20.09.2000
(73) Titulaire: Messier-Bugatti, 78140 Velizy Villacoublay (FR)
(72) Inventeur: PARMENTIER, Philippe, F-69100 Villeurbanne (FR); BEGUIN, François, F-45100 Orléans (FR); FRACKOWIAK, Elzbieta, PL-60 Poznan (PL)
(74) Mandataire: Joly, Jean-Jacques
(86) Numéro de dépôt international: FR9802580
(87) Numéro de publication internationale: WO9928983

(56) Documents cités:
- EP-A- 0 460 617
- EP-A- 0 767 505
- DATABASE WPI Section Ch, Week 8733 Derwent Publications Ltd., London, GB; Class A97, AN 87-231071 XP002076471 & JP 62 154461 A (TOHO RAYON KK)

## Description

### Domaine de l'invention

L'invention concerne les batteries secondaires, notamment les batteries rechargeables au lithium, et vise plus particulièrement la réalisation d'électrodes en fibres de carbone pour de telles batteries.

### Arrière-plan de l'invention

Dans des batteries secondaires au lithium, il est connu d'utiliser, comme anode, un matériau carboné au sein duquel des ions lithium peuvent être insérés pendant la charge et duquel ils sont désinsérés pendant la décharge.

Le plus souvent, le matériau carboné se présente sous forme d'une poudre ou de fibres de carbone ou graphite agglomérées avec un liant et déposées sur un substrat électriquement conducteur tel qu'une feuille de cuivre ou autre métal conducteur. Les documents EP 0 460 617 et EP 0 765 505 illustrent par exemple cet état de la technique.

Dans le document EP 0 460 617, il est précisé que le carbone des particules ou fibres présente une distance inter-réticulaire moyenne (d₀₀₂) de préférence comprise entre 0,345 et 0,37 nm et une taille de cristallite telle que la hauteur moyenne (L_{c}) est comprise de préférence entre 1,5 et 7 nm et la dimension latérale moyenne (Lₐ) est comprise de préférence entre 1,9 et 7 nm. Le carbone peut être à précurseur cellulosique carbonisé à une température atteignant 1800° C. La porosité du carbone est de préférence comprise entre 4.10⁻³ et 3.10⁻² ml/g.

Dans le document EP 0 767 505, une poudre est utilisée en un carbone à précurseur cellulosique carbonisé à une température de préférence comprise entre 1100°C et 1400°C et la distance (d₀₀₂) moyenne est au moins égale à 0,365 nm.

Un inconvénient de cette technique connue tient à l'utilisation de solvants, pour le mélange de la poudre carbonée avec un liant, lesquels solvants doivent être récupérés et régénérés. En outre, les liants utilisés couramment sont susceptibles de se détériorer à des températures relativement peu élevées, typiquement au-delà de 50°C, avec le risque d'altération de l'électrode. De plus encore, les possibilités de conformation sans détérioration du complexe constitué par le substrat métallique recouvert d'une ou deux couches de particules carbonées agglomérées dans un liant sont réduites, ce qui limite la géométrie des électrodes susceptibles d'être réalisées.

Il a aussi été proposé d'utiliser un matériau carboné sous forme de fibres de carbone, notamment sous forme d'une texture tissée ou non tissée en fibres de carbone. Il peut être fait référence au document EP-A-0 629 011 qui décrit une électrode formée par une nappe de fibres unidirectionnelles fixée par adhésif sur une feuille de matériau électriquement conducteur. La limitation de conformation existe comme dans le cas précédent.

Un problème existe aussi avec l'utilisation de matériau carboné sous forme graphite : il s'agit du risque d'exfoliation, c'est-à-dire de destruction partielle de la structure du carbone par suite de cycles successifs de charge et de décharge.

L'invention a pour but de fournir une électrode en fibres de carbone permettant d'éliminer ou au moins d'atténuer fortement ce risque. L'invention a aussi pour but de fournir une électrode en fibres de carbone pouvant être aisément conformée. L'invention a aussi pour but de fournir une électrode en fibres de carbone ayant une capacité améliorée d'insertion et de désinsertion d'ions lithium dans son utilisation pour des batteries secondaires au lithium. Dans cette même utilisation, l'invention a encore pour but de fournir une électrode en fibres de carbone sous une forme offrant la possibilité d'introduction d'agents dopant l'affinité avec le lithium, sur le plan électronique et/ou stérique.

### Brève description de l'invention

Selon un aspect de l'invention, une électrode pour batterie secondaire est formée par un tissu électriquement conducteur en fibres de carbone dans lequel le carbone des fibres présente une distance inter-réticulaire moyenne (d₀₀₂) au moins égale à 0,36 nm, a une taille de cristallite telle que la hauteur moyenne (L_{c}) est comprise entre 0,7 nm et 3 nm et la dimension latérale moyenne (Lₐ) est comprise entre 2 nm et 6 nm et présente une porosité totale comprise entre 10 et 30 %.

La distance inter-réticulaire (d₀₀₂) est la mesure de la distance entre deux feuillets graphènes consécutifs au sein de la structure du carbone, telle qu'obtenue par diffraction des rayons X sur le substrat. Les dimensions L_{c} et Lₐ sont mesurées de la même façon, comme décrit en détail plus loin.

De préférence, la distance inter-réticulaire (d₀₀₂) est au moins égale à 0,38 nm, tandis que la taille des cristallites est telle que la hauteur (L_{c}) est environ égale à 1 nm et la dimension latérale (Lₐ) est environ égale à 3 nm, et la porosité totale de la fibre de carbone est environ égale à 20 %.

Ainsi, une caractéristique de l'invention réside dans l'utilisation de fibres de carbone dans lesquelles la distance inter-réticulaire (d₀₀₂) est supérieure à celle du graphite (typiquement 0,3354 nm). Le risque d'exfoliation par les insertions et désinsertions répétées d'ions lithium entre feuillets de la structure du carbone est donc grandement diminué, voire éliminé. En outre, les faibles dimensions des cristallites et la porosité offrent des espaces d'accueil aux ions lithium.

Les fibres de carbone sont issues d'un précurseur donnant un carbone "dur", c'est-à-dire non graphitable, tel qu'un précurseur choisi parmi les précurseurs cellulosiques, les précurseurs phénoliques et les précurseurs brais isotropes. Un tel carbone "dur" présente une structure et une microtexture nettement moins bien organisées que celle du graphite, ce qui favorise aussi l'insertion et la désinsertion d'ions lithium et permet d'obtenir des batteries au lithium de capacité élevée.

De préférence, les fibres de carbone sont issues d'un précurseur cellulosique, tel qu'une rayonne, ou une fibranne dans lequel du noir de carbone peut avoir été incorporé.

De préférence encore, le substrat en fibres de carbone est un tissu à précurseur cellulosique et notamment rayonne, qui n'est pas lié à un support métallique conducteur. On évite ainsi les problèmes résultant de l'utilisation de liants susceptibles de se dégrader à l'échauffement, et on facilite la mise en forme éventuelle de l'électrode, par exemple par enroulement.

Selon un autre aspect de l'invention, un procédé de fabrication d'une électrode pour batterie secondaire comprend les étapes qui consistent à :
- élaborer une texture bidimensionnelle en tissu de fibres de précurseur de carbone choisi parmi les précurseurs cellulosiques, les précurseurs phénoliques et les précurseurs brais isotropes, et
- effectuer un traitement thermique à une température comprise entre 700°C et 1300°C afin de transformer le précurseur en un carbone dans lequel la distance inter-réticulaire (d₀₀₂) est au moins égale à 0,36 nm, de préférence au moins égale à 0,38 nm, la taille de cristallite est telle que la hauteur moyenne (L_{c}) est comprise entre 0,7 nm et 3 nm, de préférence environ égale à 1 nm, tandis que la dimension latérale moyenne (Lₐ) est comprise entre 2 nm et 6 nm, de préférence environ égale à 2 nm, et la porosité totale des fibres de carbone est comprise entre 10 % et 30 %, de préférence environ égale à 20 %, de sorte qu'une texture bidimensionnelle en tissu de fibres de carbone électriquement conducteur est obtenue formant électrode.

Le traitement thermique de transformation du précurseur en carbone est effectué à une température comprise de préférence entre 700°C et 1 300°C, donc bien inférieure à celle requise pour une graphitation, typiquement 2 800°C. Dans le cas d'un précurseur rayonne, la température de traitement thermique est avantageusement comprise entre 900°C et 1 000°C, et le temps de séjour à cette température est de préférence compris entre 0,1 min et 1,5 min.

Par un choix approprié du précurseur de carbone et du traitement thermique, il est possible d'aboutir à un carbone ayant des feuillets contenant un nombre important de défauts de type hybridation sp3 et ayant une très faible taille de cristallites. Il en résulte, d'une part, un moindre risque d'exfoliation en raison d'une certaine "élasticité" de la structure du carbone et, d'autre part, une grande capacité d'insertion-désinsertion d'ions lithium en raison, notamment, du plus grand nombre de porosités que contient la fibre au sein de sa texture.

La texture en fibres de carbone peut être obtenue à partir d'une texture bidimensionnelle telle qu'un tissu, un feutre, un tricot, une nappe unidirectionnelle, ou plusieurs nappes unidirectionnelles superposées.

Selon encore un autre aspect de l'invention, dans une batterie secondaire ayant une anode et une cathode permettant l'insertion et la désinsertion d'ions lithium et un électrolyte, l'anode est constituée par un substrat en fibres de carbone réalisée comme décrit plus haut.

### Brève description des dessins

Sur les dessins annexés :
- la figure 1 est une vue très schématique partielle en coupe d'une structure de batterie secondaire, et
- les figures 2 et 3 sont des courbes illustrant l'évolution du potentiel lors de 5 charges et décharges successives, donnant par conséquent la capacité de la batterie après chaque étape, respectivement pour un premier et un deuxième exemple de réalisation.

### Description de modes préférés de réalisation de l'invention

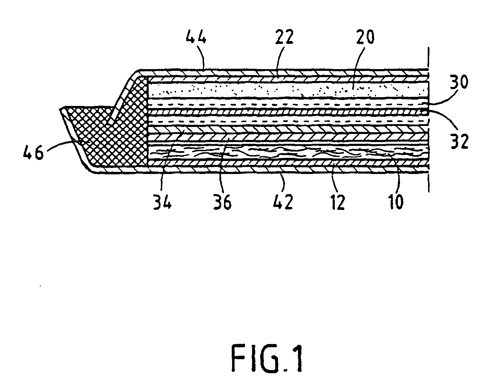

La figure 1 montre partiellement une batterie secondaire au lithium en forme de disque ou "bouton" comprenant une anode 10 formée par un substrat en carbone, une cathode 20, un séparateur formé par une ou plusieurs feuilles en forme de disques 32, 34, 36, noyées dans un électrolyte 30 entre l'anode et la cathode. Les faces de l'anode 10 et de la cathode 20 opposées à celles en contact avec l'électrolyte sont en contact électrique avec des disques collecteurs métalliques respectifs 12, 22. L'ensemble est encapsulé dans un boîtier comportant deux plaques 42, 44 respectivement appliquées contre les disques 12, 22 et reliées mécaniquement à leur périphérie par un joint isolant 46. Les plaques 42, 44 constituent les bornes négative et positive de la batterie. L'encapsulage est réalisé sous une pression suffisante pour établir les contacts électriques requis entre l'anode 10, le collecteur 12 et la plaque 42, et entre la cathode 20, le collecteur 22 et la plaque 44. Une telle structure de batterie secondaire est bien connue.

De façon également connue, la cathode 20 utilise typiquement comme matériau actif un oxyde de métal de transition contenant du lithium, par exemple LiCoO2, LiMnO₂, LiNiO₂, LiMn₂O₄, ou un polymère conjugué tel que polyacétylène, polyparaphénylène, polythiophène, polypyrrole, polyaniline. Le matériau actif est sous forme de poudre mélangée à une poudre conductrice et un agent liant pour former la cathode 20. La poudre conductrice peut être du noir de carbone ou du graphite. Le liant est par exemple du polyéthylène ou du polypropylène, ou un élastomère.

L'électrolyte 30 peut comprendre un sel de lithium dissous dans un ou plusieurs solvants organiques. Il est possible aussi d'utiliser un électrolyte solide, tel qu'un polymère.

Différents matériaux susceptibles de former la cathode 20 et l'électrolyte 30 sont connus. Il peut être fait référence notamment aux documents EP-A-0 249 331, EP-A-0 563 988, EP-A-0 629 011 (déjà mentionné) et WO-A-97/28570.

Dans le cas d'un électrolyte non solide, le séparateur a notamment pour fonction d'empêcher un court-circuit entre anode et cathode. Il est constitué d'une ou plusieurs feuilles tissées ou non tissées, par exemple en polypropylène, ou polyéthylène. Dans l'exemple illustré, une feuille mince 32 de polypropylène vise à empêcher la formation de dentrites de lithium métallique sur la cathode, pouvant engendrer un court-circuit, tandis que les feuilles 34 et 36 de polypropylène, plus épaisses, disposées entre la feuille 32 et l'anode 10, et au contact de cette dernière vise à assurer un bon mouillage des électrodes par l'électrolyte.

La présente invention concerne plus particulièrement la réalisation de l'anode 10. Celle-ci est formée par un substrat en fibres de carbone, avec une distance inter-réticulaire moyenne (d₀₀₂) entre plans de la structure du carbone au moins égale à 0,36 nm. Cette distance inter-réticulaire moyenne est comprise entre 0,36 nm et 0,39 nm, de préférence au moins égale à 0,38 nm. La hauteur (L_{c}) des cristallites est en moyenne de 0,7 nm à 3 nm, de préférence d'environ 1 nm, et leur taille latérale (Lₐ) est en moyenne de 2 nm à 6 nm, de préférence d'environ 3 nm. La porosité totale des fibres de carbone est comprise entre 10 % et 30 %, de préférence égale à environ 20 %.

La distance inter-réticulaire (d₀₀₂) est mesurée par l'application de la loi de Bragg sur la raie 002 du carbone. La source de rayons X émet en direction perpendiculaire aux fibres de carbone à évaluer, celles-ci tournant autour d'un axe confondu avec la direction des rayons X émis afin d'obtenir des spectres moyens s'affranchissant de l'orientation des macromolécules du matériau. Les largeurs à mi-hauteur des pics 002 et hK obtenus sur le spectre moyen conduisent à la mesure respectivement de la hauteur (L_{c}) et de la dimension latérale (Lₐ) des cristallites par l'emploi de la formule de Scherrer. Les valeurs L_{c} et Lₐ mentionnées dans la présente demande sont donc des valeurs moyennes.

La porosité totale des fibres de carbone représente le pourcentage du volume occupé par les pores par rapport au volume apparent des fibres. Elle peut être mesurée par la technique connue de diffusion des rayons X aux petits angles (ou méthode "DPAX"). A cet effet, les fibres sont exposées à un faisceau de rayons X dans des conditions telles qu'il y a contraste de densité électronique entre les vides (pores) et la matière (carbone), donc une intensité diffusionnelle, liée au taux de porosité totale des fibres de carbone.

Le substrat en fibres de carbone est formée à partir d'une texture bidimensionnelle en tissu de fibres de précurseur de carbone. Les fibres de précurseur de carbone sont formées de filaments continus ou discontinus.

Pour former le substrat en fibres de carbone, plusieurs couches de texture bidimensionnelle peuvent être superposées. Les couches superposées sont avantageusement liées entre elles, par exemple par aiguilletage. Dans ce cas, l'aiguilletage est de préférence réalisé au stade précurseur, c'est-à-dire avant traitement thermique de transformation du précurseur en carbone.

Le précurseur de carbone utilisé est choisi parmi ceux qui, par traitement thermique, donnent un carbone "dur" non graphitable présentant la distance inter-réticulaire (d₀₀₂), la taille de cristallites et la porosité totale requises.

Des précurseurs industriels convenant à cet effet sont des précurseurs cellulosiques, des précurseurs phénoliques et des précurseurs brais isotropes. Le traitement thermique de transformation du précurseur est réalisé à une température maximale comprise entre 700°C et 1 300°C, pendant une durée relativement brève, de préférence de moins d'une minute à quelques minutes. Ce traitement thermique est donc nettement plus aisé à mettre en oeuvre que celui qui serait requis pour effectuer une graphitation, celle-ci nécessitant une température typiquement d'environ 2 800°C.

On utilise de préférence un précurseur cellulosique tel qu'une rayonne, une fibranne. Dans le cas d'une rayonne, le traitement thermique est effectué à une température comprise entre 900°C et 1 000°C, le maintien à cette température étant assuré pendant une durée comprise entre 0,1 min et 1,5 min. Il peut être précédé par une phase de précarbonisation à une température comprise entre 350°C et 420°C.

De préférence encore, on utilise un précurseur cellulosique, tel qu'une rayonne, dans lequel a été incorporé du noir de carbone. De la sorte, la résistance électrique de la texture en fibres de carbone est suffisamment faible pour ne pas nécessiter la liaison de la texture à un support électriquement conducteur tel qu'une feuille métallique pour assurer la fonction d'électrode. Outre l'avantage de ne pas avoir à utiliser de liant, il en résulte une beaucoup plus grande facilité de conformation de l'électrode en fonction de l'utilisation envisagée.

Avantageusement, avant traitement thermique de transformation en carbone, on incorpore à la texture bidimensionnelle en fibres de précurseur de carbone un agent ayant pour résultat de faciliter ultérieurement l'insertion et la désinsertion d'ions lithium, en engendrant une désorganisation de la structure et/ou microtexture du carbone et/ou en augmentant l'affinité vis-à-vis d'ions lithium.

Un tel agent est choisi parmi les composés minéraux ou organiques ayant une fonction d'aménagement de la structure et/ou de la microtexture du carbone, de caractère électronique et/ou stérique, de façon à faciliter l'insertion et la désinsertion d'éléments tels que le lithium.

Des exemples de tels agents sont des organo-métalliques, notamment organo-siliciés, type silicates d'éthyle, organo-staniques et organo-borés, type borates, pour les composés organiques, ou l'acide phosphorique, le tétraborate de sodium et le chlorure d'ammonium pour les composés minéraux.

On notera que la réalisation d'une anode sous forme de structure de fibres de carbone conformément à l'invention peut être envisagée pour des batteries secondaires différentes de celle illustrée par la figure 1, notamment des cellules de batteries secondaires de forme cylindrique. Dans ce cas, le substrat en fibres de carbone se présente non pas sous forme de strate(s) à plat, mais sous forme d'un enroulement.

### Exemples

Des exemples de mise en oeuvre de l'invention seront maintenant décrits dans le cadre de l'application à une batterie secondaire au lithium telle que montrée par la figure 1.

### Exemple 1

Une batterie secondaire est réalisée ayant une cathode 20 formée d'une poudre de LiCoO₂ agglomérée avec du noir de carbone dans un liant tel que l'oxyde de polyéthylène (POE) ou le fluorure de polyvinylidène (PVDF). La cathode, en forme de disque de diamètre égal à 10 mm et d'épaisseur environ égale à 0,7 mm, est au contact d'un disque collecteur 22 en nickel.

L'électrolyte 30 est une solution de LiPF₆ dans un solvant constitué d'un mélange de carbonate d'éthylène et de carbonate de diéthyle. Le volume d'électrolyte est d'environ 1 ml.

La feuille de séparateur 32 est une feuille de polypropylène d'épaisseur inférieure à 0,5 mm, tandis que les feuilles de séparateur 34, 36 sont des feuilles de polypropylène d'épaisseur également inférieure à 0,5 mm.

L'anode 10 est constituée par une couche de tissu en fibres de carbone en forme de disque de diamètre environ égal à 8 mm et d'épaisseur environ égale à 0,6 mm. Elle est au contact d'un disque collecteur 12 en nickel.

L'ensemble est enserré entre des bornes 42, 44 formées par des plaques d'acier inoxydable, l'étanchéité étant assurée par un joint périphérique 46.

L'anode 10 est obtenue à partir d'un tissu de rayonne sous forme de viscose multifilaments d'origine textile dans laquelle a été incorporé du noir de carbone.

La viscose est carbonisée à une température d'environ 1 000°C, le temps de séjour à cette température étant d'environ 1 min, après une précarbonisation à environ 400°C. On obtient un carbone ayant une distance moyenne (d₀₀₂) égale à 0,384 nm des dimensions moyennes de cristallites L_{c} et Lₐ égales respectivement à 2,03 nm et à 3,57 nm, et une porosité totale des fibres de carbone environ égale à 21 %. On obtient aussi un tissu de carbone ayant les caractéristiques de tenue mécanique et de conductivité électrique permettant de l'utiliser directement comme électrode.

Un essai effectué sur la batterie ainsi réalisée avec une anode de masse (m) égale à 27,9 mg, la force électromotrice (fem) étant de 3,101 V et le courant de charge ou décharge ayant une intensité (I) égale à 0,5575 mA. Cet essai montre une capacité initiale, rapportée à la masse de la texture en fibres de carbone, égale à environ 316 mAh/g, cette capacité passant à 212 mAh/g après 5 cycles de charge-décharge.

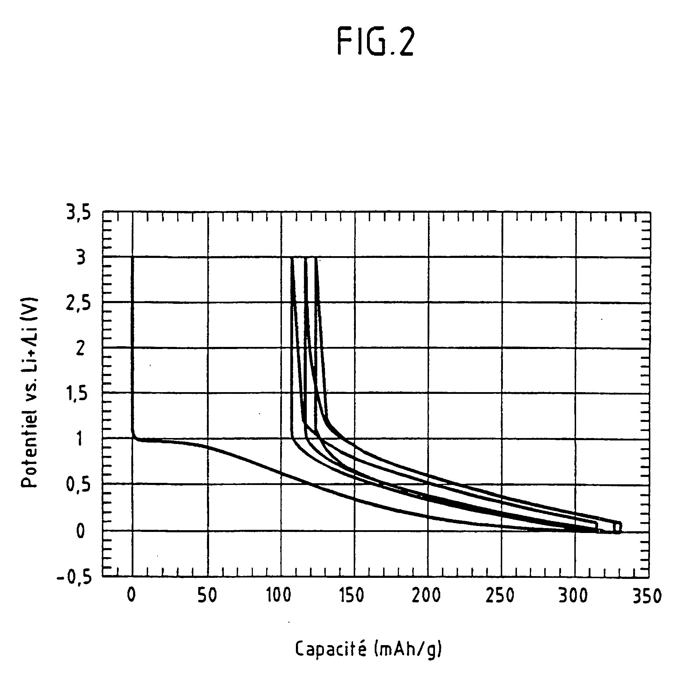

La figure 2 illustre la performance électrochimique du système réalisé en suivant l'évolution de la capacité spécifique en fonction du potentiel du système au fur et à mesure des 5 cycles de charge-décharge. Le tableau qui suit donne les capacités mesurées lors de ces 5 cycles de décharge et charge successives d1, c1, ..., d5, c5.

| | d1 | c1 | d2 | c2 | d3 | c3 | d4 | c4 | d5 | c5 |
|---|---|---|---|---|---|---|---|---|---|---|
| Capacité mAh/g | 316 | 212 | 226 | 212 | 219 | 212 | 212 | 212 | 212 | 212 |

Le tableau ci-dessus ainsi que la figure 2 montrent bien, outre la première décharge, l'obtention d'un processus reproductible et stable, avec une hystérésis relativement restreinte, l'écart charge-décharge étant très faible après la première décharge..

### Exemple 2

II est procédé comme dans l'exemple 1, mais en ajoutant au tissu de rayonne, avant carbonisation, un agent organo-stanique à un taux d'environ 10 % en masse par rapport à la masse de tissu sec.

Un essai est effectué avec une anode de 14,5 mg, la force électromotrice (fem) étant de 3,103 V et le courant de 0,29 mA.

La capacité initiale mesurée passe à 488 mAh/g, tandis que la capacité après 5 cycles de décharge-charge passe à 326 mAh/g.

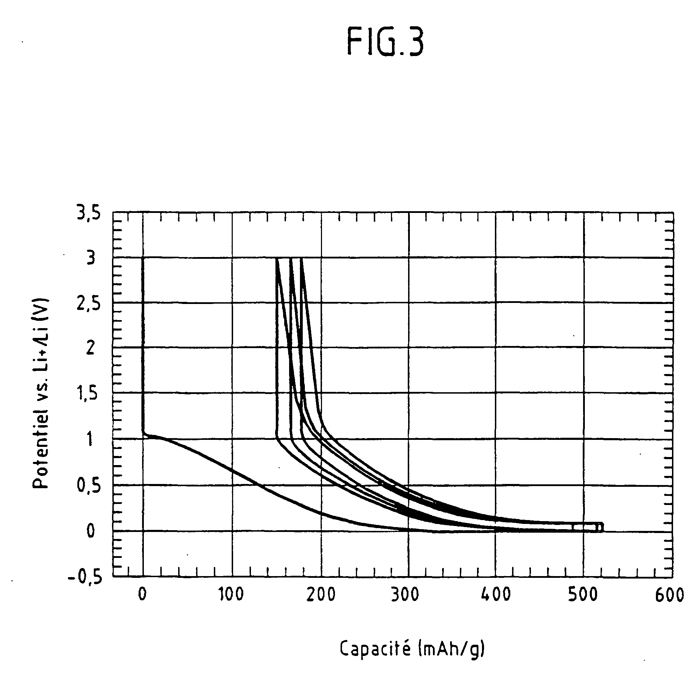

La figure 3 illustre la performance électrochimique du système réalisé, de la même façon que la figure 2. Le tableau qui suit donne les capacités mesurées lors des 5 cycles de décharge-charge d'1, c'1, ..., d'5, c'5.

| | d'1 | c'1 | d'2 | c'2 | d'3 | c'3 | d'4 | c'4 | d'5 |
|---|---|---|---|---|---|---|---|---|---|
| Capacité mAh/g | 488 | 339 | 339 | 326 | 325 | 326 | 339 | 339 | 326 |

La figure 3 ainsi que le tableau ci-dessus confirment l'obtention d'un processus reproductible et stable en dépit de l'augmentation de capacité par rapport à l'exemple 1.

Les exemples qui précèdent montrent l'excellente adaptation de la structure en fibres de carbone à une insertion et désinsertion aisées des ions lithium, et l'apport important de l'introduction d'agents additifs dans la texture des fibres de carbone, introduction aisée et compatible, notamment avec l'emploi d'un précurseur rayonne.

## Revendications

1. Electrode pour batterie secondaire formée par un tissu en fibres de carbone électriquement conducteur, dans lequel le carbone des fibres présente une distance inter-réticulaire moyenne (d₀₀₂) au moins égale à 0,36 nm, a une taille de cristallite telle que la hauteur moyenne (L_{c}) est comprise entre 0,7 nm et 3 nm et la dimension latérale moyenne (Lₐ) est comprise entre 2 nm et 6 nm, et présente une porosité totale comprise entre 10 % et 30 %.

2. Electrode selon la revendication 1, **caractérisée en ce que** la distance inter-réticulaire moyenne (d₀₀₂) est au moins égale à 0,38 nm.

3. Electrode selon l'une quelconque des revendications 1 et 2, **caractérisée en ce que** la taille des cristallites est telle que la hauteur moyenne (L_{c}) est environ égale à 1 nm et la dimension latérale moyenne (Lₐ) est environ égale à 3 nm.

4. Electrode selon l'une quelconque des revendications 1 à 3, **caractérisée en ce que** la porosité totale des fibres de carbone est environ égale à 20 %.

5. Electrode selon l'une quelconque des revendications 1 à 4, **caractérisée en ce que** les fibres de carbone sont issues d'un précurseur de carbone choisi parmi les précurseurs cellulosiques, les précurseurs phénoliques et les précurseurs brais isotropes.

6. Electrode selon la revendication 5, **caractérisée en ce que** le précurseur est une rayonne ou une fibranne.

7. Electrode selon la revendication 6, **caractérisée en ce que** le précurseur contient en outre du noir de carbone.

8. Batterie secondaire ayant une anode qui comprend un substrat en fibres de carbone et une cathode qui comprend un composé du lithium, permettant l'insertion et la désinsertion d'ions lithium, et un électrolyte, **caractérisée en ce que** l'anode est constituée par une électrode selon l'une quelconque des revendications 1 à 7.

9. Procédé de fabrication d'une électrode pour batterie secondaire selon l'une quelconque des revendications 1 à 7, comportant les étapes qui consistent à :
- élaborer une texture bidimensionnelle en tissu de fibres de précurseur de carbone choisi parmi les précurseurs cellulosiques, les précurseurs phénoliques et les précurseurs brais isotropes, et
- effectuer un traitement thermique à une température comprise entre 700°C et 1300°C afin de transformer le précurseur en un carbone dans lequel la distance inter-réticulaire (d₀₀₂) est au moins égale à 0,36 nm, la taille de cristallite est telle que la hauteur moyenne (L_{c}) est comprise entre 0,7 nm et 3 nm, et la dimension latérale moyenne (Lₐ) est comprise entre 2 nm et 6 nm, et la porosité totale des fibres de carbone est comprise entre 10 % et 30 %, de sorte qu'une texture bidimensionnelle en tissu de fibres de carbone électriquement conducteur est obtenue formant électrode.

10. Procédé selon la revendication 9, **caractérisé en ce que** l'on élabore une texture bidimensionnelle en tissu de fibres de rayonne et l'on effectue un traitement thermique à une température comprise entre 900°C et 1000°C.

11. Procédé selon la revendication 10, **caractérisé en ce que** l'on utilise un tissu en fibres de rayonne dans laquelle du noir de carbone est incorporé.

12. Procédé selon l'une quelconque des revendications 10 et 11, **caractérisé en ce que** le traitement thermique est effectué à ladite température comprise entre 900°C et 1 000°C, pendant une durée comprise entre 0,1 min et 1,5 min.

13. Procédé selon l'une quelconque des revendications 9 à 12, **caractérisé en ce que**, avant traitement thermique de transformation du précurseur, on incorpore à la texture bidimensionnelle un additif choisi parmi des composés organo-métalliques.

14. Procédé selon la revendication 13, **caractérisé en ce que** l'additif est choisi parmi des organo-siliciés, des organo-staniques et des organo-borés.

15. Procédé selon l'une quelconque des revendications 9 à 12, **caractérisé en ce que**, avant traitement thermique de transformation du précurseur, on incorpore à la texture bidimensionnelle un additif sous forme d'agent minéral choisi parmi l'acide phosphorique, le tétraborate de sodium et le chlorure d'ammonium.

## Patentansprüche

1. Elektrode für eine Sekundärbatterie, gebildet aus einem elektrisch leitfähigen Gewebe aus Kohlenstofffasem, in dem der Kohlenstoff der Fasem einen mittleren Netzebenen-Abstand (d002) von mindestens gleich 0,36 nm zeigt, eine solche Kristallit-Größe hat, dass die mittlere Höhe (Lc) zwischen 0,7 nm und 3 nm liegt und die mittlere seitliche Ausdehnung (La) zwischen 2 nm und 6nm liegt, und eine Gesamtporosität zwischen 10 % und 30 % zeigt.

2. Elektrode nach Anspruch 1,
**dadurch gekennzeichnet,**
**dass** der mittlere Netzebenen-Abstand (d002) mindestens gleich 0,38 nm ist.

3. Elektrode nach Anspruch 1 oder 2,
**dadurch gekennzeichnet,**
**dass** die Kristallit-Größe dergestalt ist, dass die mittlere Höhe (Lc) etwa gleich 1 nm ist und die mittlere seitliche Ausdehnung (La) etwa gleich 3 nm ist.

4. Elektrode nach einem der Ansprüche 1 bis 3,
**dadurch gekennzeichnet,**
**dass** die Gesamtporosität der Kohlenstofffasern etwa gleich 20 % ist.

5. Elektrode nach einem der Ansprüche 1 bis 4,
**dadurch gekennzeichnet,**
**dass** die Kohlenstofffasern aus einem Kohlenstoff-Vorläufer entstanden sind, der ausgewählt ist unter den zellulosischen Vorläufem, den phenolischen Vorläufem und den Vorläufern aus isotropem Pech.

6. Elektrode nach Anspruch 5,
**dadurch gekennzeichnet,**
**dass** der Vorläufer ein Reyon oder eine Florettseide ist.

7. Elektrode nach Anspruch 6,
**dadurch gekennzeichnet,**
**dass** der Vorläufer außerdem Rußschwarz enthält.

8. Sekundärbatterie mit einer Anode, die ein Substrat aus Kohlenstofffasern aufweist, und einer Kathode, die eine Lithium-Verbindung, die die Aufnahme und die Abgabe von Lithium-lonen erlaubt, aufweist, und einem Elektrolyten,
**dadurch gekennzeichnet,**
**dass** die Anode von einer Elektrode nach einem der Ansprüche 1 bis 7 gebildet wird.

9. Verfahren zur Herstellung einer Elektrode für eine Sekundärbatterie nach einem der Ansprüche 1 bis 7, folgende Schritte aufweisend:
- Herstellen eines zweidimensionalen Gefüges aus Gewebe aus Fasern aus Kohlenstoff-Vorläufer, der ausgewählt ist unter den zellulosischen Vorläufern, den phenolischen Vorläufern und den Vorläufern aus isotropem Pech, und
- Durchführen einer thermischen Behandlung bei einer Temperatur zwischen 700° C und 1300°C, um den Vorläufer in einen Kohlenstoff umzuwandeln, in dem der Netzebenen-Abstand (d002) mindestens gleich 0,36 nm ist, die Kristallit-Größe dergestalt ist, dass die mittlere Höhe (Lc) zwischen 0,7 nm und 3 nm liegt, und die mittlere seitliche Ausdehnung (La) zwischen 2 nm und 6 nm liegt, und die Gesamtporosität der Fasem aus Kohlenstoff zwischen 10 % und 30 % liegt, dergestalt, dass ein zweidimensionales Gefüge aus elektrisch leitfähigem Gewebe aus Kohlenstofffasem, das die Elektrode bildet, erhalten wird.

10. Verfahren nach Anspruch 9,
**dadurch gekennzeichnet,**
**dass** man ein zweidimensionales Gefüge aus Gewebe aus Reyon-Fasem herstellt und eine thermische Behandlung bei einer Temperatur zwischen 900°C und 1000°C durchführt.

11. Verfahren nach Anspruch 10,
**dadurch gekennzeichnet,**
**dass** man ein Gewebe aus Reyon-Fasem, in das Rußschwarz inkorporiert ist, verwendet.

12. Verfahren nach Anspruch 10 oder 11,
**dadurch gekennzeichnet,**
**dass** die thermische Behandlung bei der Temperatur zwischen 900°C und 1000°C während einer Dauer zwischen 0,1 min und 1,5 min durchgeführt wird.

13. Verfahren nach einem der Ansprüche 9 bis 12,
**dadurch gekennzeichnet,**
**dass** man vor der thermischen Behandlung zur Umwandlung des Vorläufers in das zweidimensionale Gefüge einen Zusatz, der unter den metallorganischen Verbindungen ausgewählt ist, inkorporiert.

14. Verfahren nach Anspruch 13,
**dadurch gekennzeichnet,**
**dass** der Zusatz ausgewählt wird unter den Silicium-organischen Verbindungen, den Zinn-organischen Verbindungen und den Bor-organischen Verbindungen.

15. Verfahren nach einem der Ansprüche 9 bis 12,
**dadurch gekennzeichnet,**
**dass** man vor der thermischen Behandlung zur Umwandlung des Vorläufers in das zweidimensionale Gefüge einen Zusatz in der Form eines mineralischen Wirkstoffs, der ausgewählt ist unter Phosphorsäure, Natriumtetraborat und Ammoniumchlorid, inkorporiert.

## Claims

1. A secondary cell electrode constituted by an electrically conductive carbon fibre fabric in which the carbon of the fibres has a mean lattice surface spacing (d₀₀₂) of not less than 0.36 nm and a crystallite size such that the mean height (L_{c}) lies in the range 0.7 nm to 3 nm and the mean width (Lₐ) lies in the range 2 nm to 6 nm, and presents total porosity lying in the range 10% to 30%.

2. An electrode according to claim 1, **characterised in that** the mean lattice surface spacing (d₀₀₂) is not less than 0.38 nm.

3. An electrode according to claim 1 or 2, **characterised in that** the size of the crystallite is such that the mean height (L_{c}) is equal to about 1 nm and the mean width (Lₐ) is equal to about 3 nm.

4. An electrode according to any one of claims 1 to 3, **characterised in that** the total porosity of the carbon fibres is equal to about 20%.

5. An electrode according to any one of claims 1 to 4, **characterised in that** the carbon fibres are derived from a carbon precursor selected from cellulose precursors, phenolic precursors, and isotropic pitch precursors.

6. An electrode according to claim 5, **characterised in that** the precursor is rayon or viscose.

7. An electrode according to claim 6, **characterised in that** the precursor further contains carbon black.

8. A secondary cell comprising: an anode comprising a carbon fibre substrate; a cathode comprising a lithium compound enabling lithium ions to be inserted and de-inserted; and an electrolyte, the cell being **characterised in that** the anode is constituted by an electrode according to any one of claims 1 to 7.

9. A method of manufacturing an electrode for a secondary cell according to any one of claims 1 to 7, the method including the steps consisting in:
- preparing a two-dimensional fabric of carbon-precursor fibres selected from cellulose precursors, phenolic precursors, and isotropic pitch precursors; and
- performing heat treatment at a temperature lying in the range 700°C to 1300°C to transform the precursor into carbon, in which the lattice surface spacing (d₀₀₂) is not less than 0.36 nm, and the crystallite size is such that the mean height (L_{c}) lies in the range 0.7 nm to 3 nm and the mean width (Lₐ) lies in the range 2 nm to 6 nm, and the total porosity of the carbon fibres lies in the range 10% to 30%, such that a two-dimensional fabric forming electrode is obtained which is made of an electrically conductive carbon fibre fabric.

10. A method according to claim 9, **characterised in that** a two-dimensional rayon fibre fabric is prepared and heat treatment is performed at a temperature lying in the range 900°C to 1000°C.

11. A method according to claim 10, **characterised in that** a rayon fibre fabric is used in which carbon black is incorporated.

12. A method according to claim 10 or 11, **characterised in that** the heat treatment is performed at said temperature lying in the range 900°C to 1000°C for a duration lying in the range 0.1 min to 1.5 min.

13. A method according to any one of claims 9 to 12, **characterised in that** an additive selected from organo-metallic compounds is incorporated in the two-dimensional fabric prior to the heat treatment for transforming the precursor.

14. A method according to claim 13, **characterised in that** the additive is selected from organo-silicon compounds, organo-tin compounds, and organo-boron compounds.

15. A method according to any one of claims 9 to 12, **characterised in that** an additive is incorporated in the two-dimensional fabric prior to the heat treatment for transforming the precursor, said additive being in the form of an inorganic agent selected from phosphoric acid, sodium tetraborate, and ammonium chloride.
